# EUROPÄISCHE PATENTSCHRIFT

(11) **EP 1 300 288 B1**
(45) Veröffentlichungstag und Bekanntmachung des Hinweises auf die Patenterteilung: **02.03.2005**
(21) Anmeldenummer: 02021884.8
(22) Anmeldetag: 30.09.2002
(51) Int. Cl.: B60R 1/06, B60R 1/074, B60R 1/076, F16H 25/18

(54) **Vorrichtung zum schwenkbeweglichen Lagern eines Tragarms für einen Aussenspiegel**
Device for pivotally mounting a supporting arm of an exterior mirror
Dispositif de montage pivotant pour un bras-support du rétroviseur extérieur

(30) Priorität: 02.10.2001 DE 10148611
(43) Veröffentlichungstag der Anmeldung: 09.04.2003
(73) Patentinhaber: MEKRA Lang GmbH & Co. KG, 90765 Fürth (DE)
(72) Erfinder: Lang, Heinrich, 91465 Fürth (DE); Popp, Albrecht, 91629 Weihenzell (DE)
(74) Vertreter: Winter, Brandl, Fürniss, Hübner, Röss, Kaiser, Polte Partnerschaft

(56) Entgegenhaltungen:
- DE-A- 1 957 658
- DE-A- 4 300 745
- FR-A- 2 161 491
- US-A- 4 728 181

## Beschreibung

Die Erfindung betrifft eine Vorrichtung zum schwenkbeweglichen Lagern eines Tragarms für einen Außenspiegel eines Kraftfahrzeugs gegenüber einem karosseriefesten Halteteil. Eine solche, die Merkmale des Oberbegriffs des Anspruchs 1 zeigende Vorrichtung ist aus der US-A-4 728 181 bekannt.

Es ist seit langem übliche Praxis, den Tragarm für einen Außenspiegel eines Kraftfahrzeugs gegenüber einem karosseriefesten Halteteil schwenkbeweglich zu gestalten. Gründe hierfür sind u.a. die Notwendigkeit, in bestimmten Situationen den Tragarm und damit den Außenspiegel aus seiner normalen, von der Karosserie abstehenden Stellung in eine eingeklappte oder eingeschwenkte Stellung zu verschwenken, in welcher der Tragarm im wesentlichen parallel zur benachbarten Karosseriefläche verläuft. Dies ist beispielsweise beim Durchfahren einer Waschstraße, beim Durchfahren besonders enger Durchfahrten, wo die abstehenden Außenspiegel anstoßen könnten etc. notwendig. Weiterhin soll durch die Verschwenkbarkeit des Tragarms gegenüber dem Halteteil sichergestellt werden, daß beim Auftreffen des Spiegels an ein Hindernis der Tragarm wegschwenkt, d.h. nachgibt, so daß der Außenspiegel nach Möglichkeit nicht beschädigt wird.

Das Schwenken des Tragarms beim Auftreffen des Außenspiegels auf ein Hindernis erfolgt quasi selbstständig. Anders verhält es sich immer dann, wenn der Tragarm und damit der Außenspiegel bewußt oder gewollt geschwenkt werden soll, also beispielsweise vor dem Durchfahren einer engen Durchfahrt oder einer Waschstraße etc.. Hierzu war es bislang notwendig, daß der Fahrer des Fahrzeuges den Außenspiegel von Hand in die eingeklappte oder angelegte Stellung verschwenkt. Hat das Fahrzeug auf der Beifahrerseite ebenfalls einen Außenspiegel, wie dies in aller Regel der Fall ist, ist der Fahrer dann dazu gezwungen, zu dessen Verschwenkung extra auszusteigen.

Handelt es sich bei dem Kraftfahrzeug um ein Nutzfahrzeug, also beispielsweise einen LKW oder Omnibus, sind die Außenspiegel oftmals so hoch angebracht, daß sie nicht ohne weiteres für einen Verschwenkvorgang erreichbar sind.

Aufgabe der vorliegenden Erfindung ist es daher, eine Vorrichtung zum schwenkbeweglichen Lagern eines Tragarms für einen Außenspiegel eines Kraftfahrzeugs gegenüber einem karosseriefesten Halteteil zu schaffen, bei der die genannten Nachteile und hier insbesondere die Notwendigkeit, den Tragarm gegenüber dem Halteteil von Hand zu verschwenken, beseitigt sind.

Zur Lösung dieser Aufgabe schlägt die vorliegende Erfindung gemäß Anspruch 1 eine Vorrichtung zum schwenkbeweglichen Lagern eines Tragarms für einen Außenspiegel eines Kraftfahrzeug gegenüber einem karosseriefesten Halteteil vor, wobei zwischen dem Halteteil und dem Tragarm ein Schwenklager angeordnet ist und wobei eine Verschwenkungsbewegung des Tragarms gegenüber dem Halteteil um die Schwenkachse des Schwenklagers durch einen am Schwenklager angreifenden Fremdantrieb bewirkt wird.

Durch den am Schwenklager angreifenden Fremdantrieb entfällt die Notwendigkeit, den Tragarm gegenüber dem karosseriefesten Halteteil von Hand zu verschwenken. Der Fahrer des Kraftfahrzeugs kann somit durch Betätigung des Fremdantriebs quasi auf Knopfdruck den Tragarm gegenüber dem Halteteil verschwenken. Für eine Schwenkbewegung beispielsweise des Außenspiegels auf der Beifahrerseite entfällt somit für den Fahrer die Notwendigkeit, hierzu extra auszusteigen. Auch schwer zugänglich angebrachte Außenspiegel können durch den Gegenstand der vorliegenden Erfindung problemlos verschwenkt werden.

Der Fremdantrieb ist bzw. bewirkt ein von außen auf das Schwenklager aufgebrachtes Rotationsdrehmoment, welches durch einen im Schwenklager angeordneten Getriebemechanismus in die Verschwenkungsbewegung umgesetzt wird. Rotationsdrehmomente lassen sich problemlos erzeugen, beispielsweise gemäß einer bevorzugten Ausgestaltungsform durch einen Motor, insbesondere einen Elektromotor. Durch den Getriebemechanismus, der im Schwenklager angeordnet ist, wird erfindungsgemäß das Rotationsdrehmoment in die Verschwenkungsbewegung umgesetzt. Da der Getriebemechanismus im Schwenklager angeordnet ist, baut die gesamte erfindungsgemäße Vorrichtung kompakt und klein. Weiterhin kann durch den Getriebemechanismus und gegebenenfalls in Verbindung mit dem als Fremdantrieb dienenden Motor dem Schwenklager eine gewisse Selbsthemmung verliehen werden, so daß der Tragarm und damit der Außenspiegel gegenüber dem karosseriefesten Halteteil einerseits sicher, d.h. dem Fahrtwind widerstehend und vibrationsfrei gehalten wird, beim Auftreffen des Außenspiegels auf ein festes Hindernis jedoch diese Selbsthemmung überwunden wird, so daß der Außenspiegel selbstständig wegschwenkt.

Der Winkelbereich der Verschwenkungsbewegung ist bevorzugt begrenzt. Hierdurch wird sichergestellt, daß der Tragarm gegenüber dem Halteteil beispielsweise zwei definierte Endlagen einnehmen kann, wobei eine der Endlagen dem vollständig ausgeschwenkten Spiegel und die andere Endlage dem vollständig eingeschwenkten Spiegel entspricht.

Die Verschwenkung der. Bewegung ist bevorzugt durch Umkehrung der Drehrichtung des Fremdantriebs reversibel, um den Spiegel nicht nur ein-, sondern auch ausschwenken zu können.

Erfindungsgemäß weist der Getriebemechanismus in einer Alternative des Anspruchs 1 auf: a) eine mit der Schwenkachse des Schwenklagers fluchtende Welle, welche zumindest über einen Teilabschnitt der Längserstreckung ein Außengewinde aufweist und an welcher das Rotationsdrehmoment angreift; b) ein Mitnehmerteil, welches im Gewindeeingriff mit dem Außengewinde der Welle ist und welches gegenüber dem karosseriefesten Halteteil gelagert und bei Drehung der Welle entlang der Längsachse der Welle linear beweglich ist; c) ein drehbeweglich gegenüber dem karosseriefesten Halteteil gelagertes Steuerteil, welches wenigstens eine Steuerkurve aufweist, welche von dem Mitnehmerteil durchsetzt wird, so daß eine Linearbewegung des Mitnehmerteils entlang der Welle in eine Drehbewegung des Steuerteils umgesetzt wird; und d) eine Verbindung zwischen dem Steuerteil und dem Tragarm des Spiegels zur Übertragung der Drehbewegung des Steuerteils auf den Tragarm.

Die aus diesem Aufbau bzw. dieser Konstruktion hervorgehenden Vorteile werden in der nachfolgenden Beschreibung von Ausführungsformen der Erfindung eingehend erläutert.

Die Verbindung zwischen Steuerteil und Tragarm erfolgt bevorzugt durch ein mit dem Steuerteil drehfest verbundenes Übertragungsteil. Auch die hiermit einhergehenden Vorteile werden nachfolgend noch näher erläutert werden.

Gemäß einer anderen erfindungsgemäßen Alternative des Anspruchs 1 kann das Mitnehmerteil gegenüber dem Tragarm gelagert und das Steuerteil gegenüber dem Tragarm drehbeweglich gelagert sein, wobei eine Verbindung zwischen dem Steuerteil und dem karosseriefesten Halteteil eine Drehbewegung des Steuerteils auf das karosseriefeste Halteteil überträgt und damit der Haltearm relativ zum karosseriefesten Halteteil verschwenkt wird. Im Gegensatz zur weiter oben genannten Ausführungsform stellt diese Ausgestaltungsform oder Ausführungsform quasi eine kinematische Umkehr dar, wobei jedoch die gleichen Effekte und Vorteile erzielbar sind.

Bevorzugt sind die Welle und das Steuerteil koaxial angeordnet und in einer am karosseriefesten Halteteil ausgebildeten Lagerbuchse aufgenommen. Durch die koaxiale Anordnung ist einerseits der konstruktive Aufbau optimal und einfach und andererseits ist geringstmöglicher Platzbedarf gegeben.

In einer bevorzugten Ausgestaltungsform weist das Mitnehmerteil ein mit einer Gewindeöffnung zur Aufnahme des Außengewinde der Welle versehenes Mittelstück und wenigstens einen hiervon vorstehenden Zapfen auf, der zur Lagerung des Mitnehmerteils in einem in der Lagerbuchse ausgebildeten Führungsschlitz läuft. Das Mittelstück kann konstruktiv so ausgelegt werden, daß es ausreichend Material zur Ausbildung der Gewindeöffnung zur Verfügung stellt. Der wenigstens eine hiervon vorstehende Zapfen läuft in einem seitens der Lagerbuchse ausgebildeten Führungsschlitz, so daß eine saubere Führung des Mitnehmerteils gegenüber der Lagerbuchse sichergestellt ist, wenn sich das Außengewinde der Welle in der Gewindeöffung des Mitnehmerteils dreht und damit eine Verstellbewegung des Mitnehmerteils erfolgt.

Bevorzugt sind an dem Mittelstück des Mitnehmerteils zwei in Umfangsrichtung bevorzugt um 180° beabstandete Zapfen vorhanden, welche in zwei entsprechend beabstandeten Führungsschlitzen seitens der Lagerbuchse laufen. Hierdurch ist die Führung des Mitnehmerteils besonders sauber und leichtgängig.

Der Führungsschlitz oder die Führungsschlitze laufen bevorzugt parallel zur Schwenkachse. Somit ist das Mitnehmerteil gegenüber der Lagerbuchse zwar entlang deren Längsachse beweglich, jedoch gegenüber der Lagerbuchse drehfest.

Das Steuerteil weist bevorzugt zwei in Umfangsrichtung um 180° beabstandete Steuerkurven auf, welche von den beiden Zapfen des Mitnehmerteils durchsetzt werden. Bei einer linearen Bewegung des Mitnehmerteils entlang der parallel zur Schwenkachse verlaufenden Führungsschlitze wird somit durch die Steuerkurven, welche von den beiden Zapfen des Mitnehmerteils durchsetzt werden, diese Linearbewegung in eine entsprechende Drehbewegung des Steuerteils umgesetzt.

Alternativ hierzu kann der Führungsschlitz oder können die Führungsschlitze in der Lagerbuchse wendelförmig verlaufen und die Steuerkurven in dem Steuerteil laufen geradlinig und parallel zur Schwenkachse. Bei einer Linearbewegung des Mitnehmerteils führt dieses somit aufgrund der wendelförmigen Führungsschlitze oder des wendelförmigen Führungsschlitzes eine Drehbewegung aus, welche in eine entsprechende Drehbewegung des Steuerteils umgesetzt wird.

Das Steuerteil hat bevorzugt die Form einer oben im wesentlichen geschlossenen und unten offenen Hülse. Dies ist zum einen aus fertigungs- und montagetechnischen Gründen vorteilhaft und zum anderen ist es durch das oben geschlossene Ende möglich, hier das Übertragungsteil anzubringen, welches die Drehbewegung des Steuerteils auf den Tragarm des Spiegels überträgt.

In dem im wesentlichen geschlossenen Ende der Hülse befindet sich bevorzugt ein Drehlager, insbesondere ein Kugellager, welches zwischen einer Stirnfläche der Welle und dem Übertragungsteil wirkt. Eine besonders leichtgängige Führung der Welle einerseits, sowie eine leichtgängige Relativbewegung zwischen Welle und Übertragungsteil andererseits ist hierdurch sichergestellt.

Das offene Ende der Hülse, d.h. das untere Ende wird bevorzugt durch eine von der Welle durchtretene Positionierscheibe verschlossen, wobei die Hülse auf der Welle zwischen dem Drehlager und der Positionierscheibe verspannt ist. Hierdurch ist eine saubere Führung des Steuerteils bzw. der das Steuerteil bildenden Hülse sichergestellt.

Das Übertragungsteil ist bevorzugt mit dem Steuerteil und dem Tragarm verschraubt, was aus Gründen der Montage und der Wartung vorteilhaft ist.

Ist weiterhin bevorzugt die Hülse zumindest über einen Teil ihrer Längserstreckung umfangsseitig an der Innenwand der Lagerbuchse geführt, ist die Hülse noch besser gegen etwaige Kippmomente gesichert.

Weiterhin kann am karosseriefesten Halteteil ein Lager angeordnet oder ausgebildet sein, mit welchem das dem Drehlager gegenüberliegende Ende der Welle geführt wird. Auch hierdurch werden etwaige Kippmomente aufgefangen, welche auf die Welle einwirken.

Weitere Einzelheiten, Aspekte und Vorteile der vorliegenden Erfindung ergeben sich aus der nachfolgenden Beschreibung von Ausführungsformen und Abwandlungen hiervon unter Bezugnahme auf die Zeichnung. Es zeigt:
Fig. 1 eine Schnittdarstellung durch eine erfindungsgemäße Vorrichtung, wobei der Schnitt von Fig. 1 entlang der Linie I-I in Fig. 2 gelegt ist;
Fig. 2 eine Draufsicht auf die Vorrichtung von Fig. 1;
Fig. 3 eine perspektivische Draufsicht auf die erfindungsgemäße Vorrichtung;
Fig. 4 einen Schnitt durch die Anordnung bestehend aus Steuerteil, Mitnehmerteil und Welle;
Fig. 5 eine perspektivische Ansicht einer Ausgestaltungsform einer als Steuerteil dienenden Hülse; und
Fig. 6 eine perspektivische Darstellung einer Abwandlungsform einer als Steuerteil dienenden Hülse.

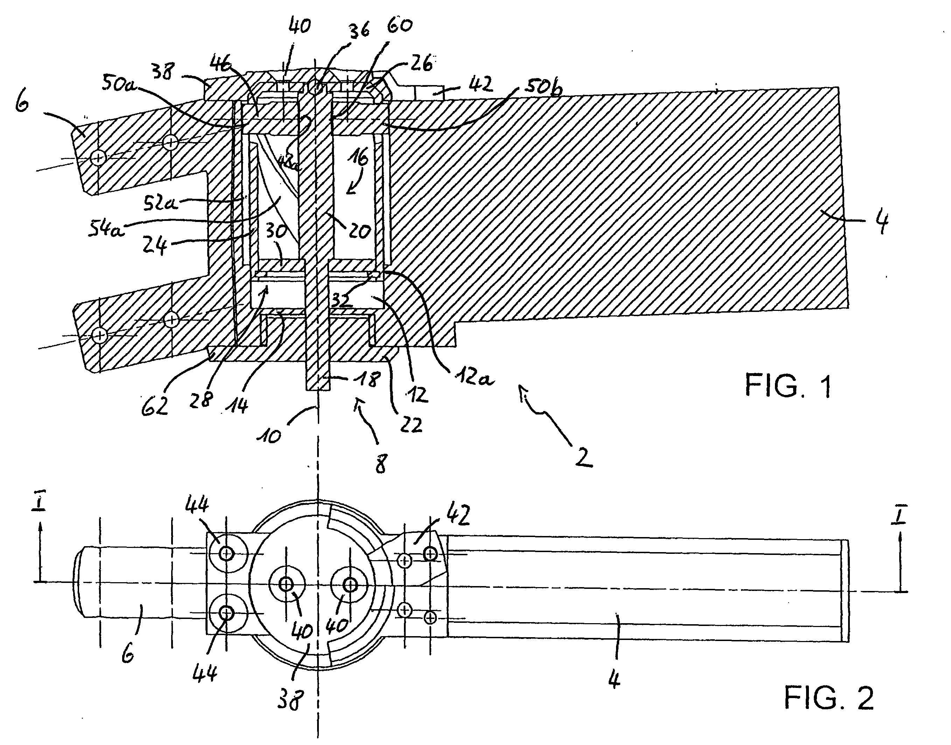

Eine in der Zeichnung insgesamt mit 2 bezeichnete Vorrichtung umfaßt gemäß den Figuren 1 bis 3 im wesentlichen ein karosseriefestes Halteteil 4 und einen Tragarm 6 für einen in der Zeichnung nicht näher dargestellten Außenspiegel eines Kraftfahrzeugs, wobei zwischen dem Halteteil 4 und dem Tragarm 6 ein Schwenklager 8 angeordnet ist, welches eine Schwenkbewegung des Tragarms 6 gegenüber dem Halteteil 4 ermöglicht.

Das Schwenklager 8 besitzt eine Schenkachse 10, um welche der Tragarm 6 bei seiner Schwenkbewegung dreht.

Im Bereich des Schwenklagers 8 ist an dem Halteteil 4 eine Lagerbuchse 12 ausgebildet. Die Lagerbuchse 12 ist in der Darstellung nach Figur 1 nach oben hin offen und unten durch eine Bodenwand 14 verschlossen. Koaxial zur Schwenkachse 10 und durch eine entsprechende Öffnung in der Bodenwand 14 verlaufend ist in der Lagerbuchse 12 eine Welle 16 angeordnet. Die Welle 16 kann im wesentlichen als aus zwei Abschnitten aufgebaut betrachtet werden, nämlich einem unteren Abschnitt 18, der die Öffnung in der Bodenwand 14 durchtritt und einem Gewindeabschnitt 20 mit einem Außengewinde. Im Bereich des unteren Abschnittes 18 der Welle 16 ist gemäß Fig. 1 ein am Halteteil 4 festgelegtes Lager 22 angeordnet, welches ebenfalls von dem unteren Abschnitt 18 der Welle 16 durchsetzt wird. Das von dem Lager 22 aus vorstehende freie Ende des unteren Abschnittes 18 ist mit einem in der Zeichnung nicht näher dargestellten Fremdantrieb, beispielsweise einem Motor in Verbindung, über welchen die Welle 16 in Drehung versetzbar ist.

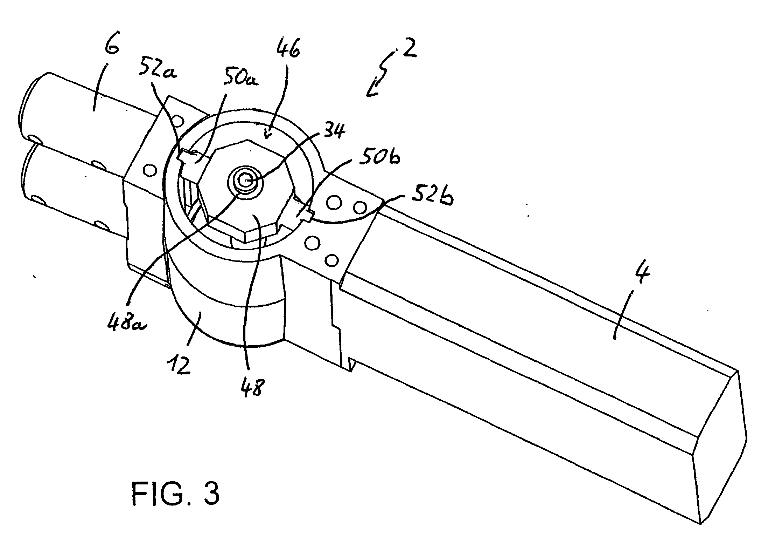

Ebenfalls koaxial zur Schwenkachse 10 befindet sich in der Lagerbuchse 12 ein hülsenförmiges Steuerteil 24 (in Fig. 3 nicht dargestellt). Das Steuerteil 24 weist ein im wesentlichen geschlossenes oberes Ende 26 und ein offenes unteres Ende 28 auf. Das untere Ende 28 ist von einer Positionierscheibe 30 verschlossen, welche an einem Herausgleiten aus dem unteren offenen Ende 28 des Steuerteils 24 durch einen Haltering 32 gehindert wird. Auch die Positionierscheibe 30 wird von der Welle 16 bzw. derem unteren Abschnitt 18 durchsetzt.

Das Steuerteil ist im Bereich seines unteren Endes 28 umfangsseitig an der Innenwand der Lagerbuchse 12 geführt, so daß das Steuerteil 24 besser gegen etwaige Kippmomente gesichert ist. Die Lagerbuchse 12 weist hierzu einen Vorsprung oder Absatz 12a auf.

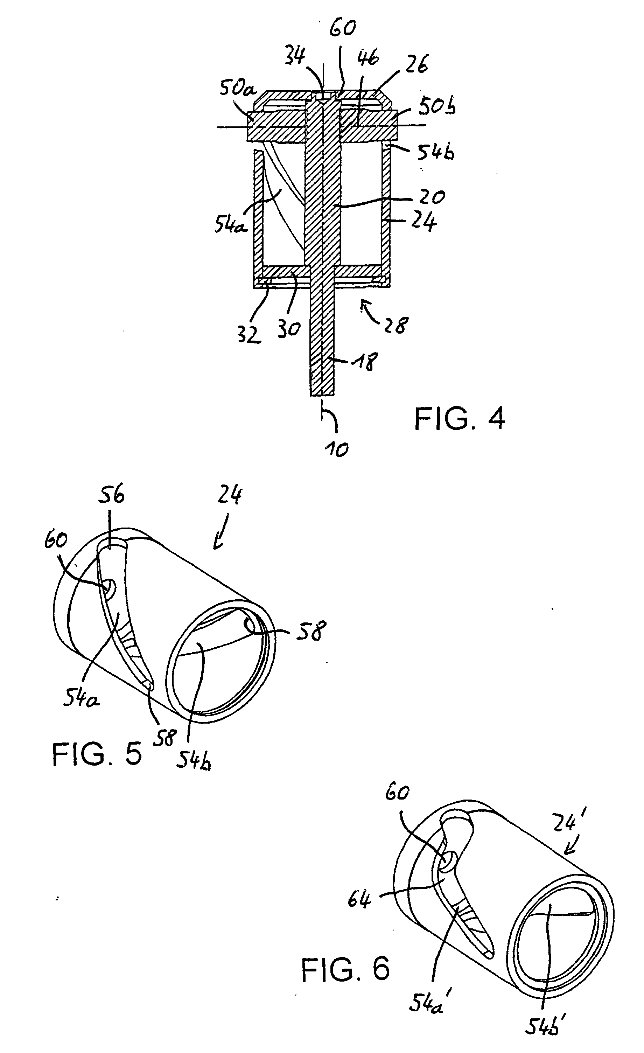

In Fig. 1 oberhalb der Positionierscheibe 30 beginnt der Gewindeabschnitt 20 der Welle 16, wobei der Gewindeabschnitt 20 in der aus Fig. 1 und auch Fig. 4 ersichtlichen Weise größeren Durchmesser als der untere Abschnitt 18 hat, so daß die Welle 16 mit ihrem Gewindeabschnitt 20 auf der Positionierscheibe 30 aufsitzt. Am oberen Ende des Gewindeabschnittes 20 weist die Welle 16 eine Ausnehmung 34 (Fig. 4) auf, in welcher eine Kugel 36 gehalten ist. Die Kugel 36 liegt gemäß Fig. 1 zwischen der Ausnehmung 34 seitens der Welle 16 und einer entsprechenden Gegenausnehmung seitens einer Abdeckung 38, welche gleichzeitig als Übertragungsteil dient. Das Übertragungsteil 38 ist durch in entsprechenden Bohrungen 40 verlaufende Schrauben mit dem oberen Ende 26 des Steuerteils 24 drehfest in Verbindung. Ein seitens des Halteteils 4 festgelegter Niederhalter 42 verhindert, daß das Übertragungsteil 38 in Fig. 1 nach oben abgehoben wird, gestattet jedoch eine Drehbewegung des Übertragungsteils 38.

Wie weiterhin aus Fig. 2 erkenntlich ist, ist das Übertragungsteil 38 mit Schrauben 44 mit dem Tragarm 6 drehfest verbunden.

Auf dem Gewindeabschnitt 20 der Welle 16 läuft ein Mitnehmerteil 46, dessen Formgebung am besten aus Fig. 3 ersichtlich ist, wo aus Gründen der Übersichtlichkeit das Steuerteil 24 weggelassen ist. Das Mitnehmerteil 46 weist ein Mittelstück 48 auf, in welchem ein Innengewinde 48a zur Aufnahme des Außengewindes am Gewindeabschnitt 20 der Welle 16 ausgebildet ist. Von dem Mittelstück 48 aus erstrecken sich in der Ausgestaltungsform gemäß Fig. 3 zwei Zapfen 50a und 50b radial nach außen, wobei diese Zapfen 50a und 50b mit ihren äußeren freien Enden in Führungsschlitzen 52a und 52b laufen, die in der inneren Umfangswand der Lagerbuchse 12 ausgebildet sind. Das Mitnehmerteil 46 ist somit in der in der Zeichnung dargestellten Ausgestaltungsform gegenüber der Lagerbuchse 12 und damit dem Halteteil 4 drehfest, jedoch bei einer Drehung der Welle 16 aufgrund des Gewindeeingriffs zwischen dem Gewindeabschnitt 20 und dem Innengewinde 48a seitens des Mitnehmerteils 46 linear entlang der Schwenkachse 10 verfahrbar, wobei sich die Bewegungsrichtung des Mitnehmerteils 46 (auf oder ab) nach der Drehrichtung der Welle 16 richtet.

Wie am besten aus Fig. 1 und Fig. 4 hervorgeht, durchtritt das Mitnehmerteil 46 mit seinen beiden Zapfen 50a und 50b, welche endseitig in den Führungsschlitzen 52a und 52b geführt sind, zwei im Außenumfang des Steuerteils 54 ausgebildete Steuerkurven 54a und 54b. Die Steuerkurven 54a und 54b haben gemäß einer Ausgestaltungsform (Fig. 5) geradlinig/wendelförmigen Verlauf. Ein Ausgangspunkt 56 jeder Steuerkurve 54, der benachbart dem oberen Ende 26 des Steuerteils 24 liegt, ist etwa gemäß Fig. 5 gegenüber einem Endpunkt 58 relativ zur Schwenkachse 10 in Umfangsrichtung versetzt, so daß die Steuerkurven 54a und 54b einen Verlauf entsprechend eines Ausschnittes aus einem Schraubengewinde oder einer Helix haben. In Fig. 5 ist weiterhin die obere Öffnung 60 zu erkennen, welche vom oberen freien Ende der Welle 16 mit der Ausnehmung 34 durchsetzt wird.

Die Arbeit- und Funktionsweise der erfindungsgemäßen Vorrichtung 2 mit dem bisher geschilderten Aufbau ist wie folgt:

Es sei angenommen, daß sich zu Beginn der Verschwenkbewegung die Vorrichtung 2 in der Stellung gemäß Fig. 1 befindet, d.h., das Mitnehmerteil 46 liegt am oberen Endbereich des Gewindeabschnittes 20 in unmittelbarer Nachbarschaft des oberen Endes 26 des Steuerteils 24, so daß die Zapfen 50a und 50b an den jeweiligen Ausgangspunkten 56 der Steuerkurven 54a und 54b liegen. Ein am unteren Abschnitt 18 aufgebrachtes Antriebsdrehmoment, beispielsweise ein Rotationsdrehmoment von einem Motor versetzt die Welle 16 in Drehung. Das Mitnehmerteil 46 steht mit seinen Zapfen 50a und 50b in drehfestem Eingriff mit den Führungsschlitzen 52a und 52b seitens des Halteteils 4. Hierdurch und durch den Gewindeeingriff zwischen dem Gewindeabschnitt 20 und dem Gewinde 48a in dem Mittelstück 48 des Mitnehmerteils 46 bewegt sich das Mitnehmerteil 46 - einen entsprechenden Drehsinn der Welle 16 vorausgesetzt - in Fig. 1 nach unten in Richtung des unteren Endes 28 bzw. der Positionierscheibe 30.

Diese linear nach unten gerichtete Bewegung des Mitnehmerteils 46 wird durch die schräg oder schraubenlinienförmig verlaufende Steuerkurve 54a und 54b in eine entsprechende Drehbewegung des Steuerteils 24 umgesetzt. Diese Drehbewegung des Steuerteils 24 wird über die in den Bohrungen 40 vorhandenen Schrauben auf das Übertragungsteil 38 weitergegeben und von hier über die Verschraubungen 44 auf den Tragarm 6.

Ein unterer Abschnitt des Tragarms 6 stützt sich hierbei noch zusätzlich an einem Flansch 62 ab, der an dem Lagerteil 22 ausgebildet ist. Bei Erreichen des Endpunktes 58 der Steuerkurven 54a und 54b ist der Tragarm 6 gegenüber dem Halteteil 4 in seiner maximal verschwenkten Position und der Motor beendet die Übertragung des Rotationsdrehmomentes auf den unteren Abschnitt 18 der Welle 16.

Das Anhalten des Motors bei Erreichen des Endpunktes 58 (und des Ausgangspunktes 56) kann beispielsweise durch Endlagenschalter oder dergleichen bewerkstelligt werden.

Zum Zurückschwenken des Tragarms 6 gegenüber dem Halteteil 4 in seine Ausgangsstellung wird die Drehrichtung des auf die Welle 16 aufgebrachten Rotationsdrehmomentes umgekehrt, so daß das Mitnehmerteil 46 in Fig. 1 von unten nach oben bewegt wird und hierbei die Zapfen 50a und 50b in den Steuerkurven 54a und 54b eine entsprechende Drehbewegung des Steuerteils 24 bewirken, welche über das Übertragungsteil 38 auf den Tragarm 6 wirkt und diesen in seine Ausgangslage zurückbewegt. Sobald die Zapfen 50a und 50b die Ausgangspunkte 56 der Steuerkurven 54a und 54b erreicht haben, ist die Stellung gemäß Fig. 1 erreicht und der Fremdantrieb stoppt mit der Drehung der Welle 16.

Fig. 6 zeigt eine Abwandlung des Steuerteils 24 von Fig. 5. Das Steuerteil 24' gemäß Fig. 6 unterscheidet sich von dem Steuerteil 24 gemäß den Figuren 1, 4 und 5 insofern, als hierbei die Steuerkurven 54a' und 54b' nicht den stetigen Verlauf der Steuerkurven 54a und 54b von Fig. 5 haben, sondern eine Sprungstelle oder einen Knick 64; durch diesen Verlauf der Steuerkurven 54a' und 54b' kann dem Schwenkvorgang zwischen Halteteil 4 und Tragarm 6 eine bestimmte Charakteristik verliehen werden, beispielsweise eine langsame Anfangsschwenkbewegung, gefolgt von eine raschen Schwenkbewegung in einem mittleren Bereich entsprechend dem Knick 64 und sodann einer langsamen Annäherung an die Endlage. Selbstverständlich sind von Fig. 6 abweichende andere Formen der Steuerkurven möglich.

Im Rahmen der Erfindung ist eine Vielzahl von Modifikationen und Abwandlungen möglich, auf die nachfolgend noch eingegangen werden soll.

In der bisher beschriebenen und zeichnerisch dargestellten Ausführungsform sind die Führungsschlitze 52a und 52b seitens des Halteteils 4 geradlinig und parallel zur Schwenkachse 10 verlaufend ausgebildet und die Steuerkurven 54a und 54b haben etwa den aus Fig. 5 oder Fig. 6 ersichtlichen Verlauf. Diese Anordnung kann insofern umgekehrt werden, als den Führungsschlitzen 52a und 54b ein schrauben- oder helixförmiger Verlauf verliehen wird und die Steuerkurven 54a und 54b seitens des Steuerteils 24 geradlinig und parallel zur Schwenkachse 10 verlaufend ausgebildet werden. Bei einer Zwangsbewegung des Mitnehmerteils nach unten oder auch nach oben aufgrund des Eingriffs zwischen dem Gewindeabschnitt 20 und dem Innengewinde 48a im Mittelstück 48 des Mitnehmerteils 46 wird das Mitnehmerteil 46 durch den Eingriff der Zapfen 50a und 50b in den dann schrauben- oder helixförmig verlaufenden Führungsschlitzen 52a und 52b in Drehung versetzt. Da die Zapfen 50a und 50b mit den geradlinig verlaufenden Steuerkurven 54a und 54b seitens des Steuerteils 24 in Eingriff stehen, wird diese Drehung wieder auf das Steuerteil 24, von dort auf das Übertragungsteil 38 und von dort auf den Tragarm 6 übertragen. Bei einer Bewegung des Mitnehmerteils 46 in Fig. 1 von unten nach oben kehrt sich die Bewegungsrichtung des Tragarms 6 entsprechend um.

In einer weiteren Ausgestaltungsform kann daran gedacht werden, sowohl die Führungsschlitze 52a und 52b als auch die Steuerkurven 54a und 54b schrauben- oder helixförmig oder sonstwie verlaufend (siehe Fig. 6) auszugestalten. Hierdurch kann eine Bewegungsüberlagerung erzielt werden und dem Schwenkvorgang eine gewünschte Charakteristik verliehen werden.

Weiterhin ist eine Umkehr der Anordnung insofern möglich, als die Lagerbuchse seitens des Tragarms 6 ausgebildet wird, so daß das Mitnehmerteil 46 gegenüber dem Tragarm 6 gelagert und das Steuerteil 24 gegenüber dem Tragarm 6 drehbeweglich gelagert ist, wobei dann eine Verbindung etwa nach Art des Übertragungsteils 38 zwischen dem Steuerteil 24 und dem karosseriefesten Halteteil 4 eine Drehbewegung des Steuerteils 24 auf das karosseriefeste Halteteil überträgt und damit der Tragarm 6 wiederum relativ zum karosseriefesten Halteteil 4 verschwenkt wird. Auch bei dieser Ausgestaltung können die weiter oben genannten Abwandlungen hinsichtlich der Führungsschlitze und Steuerkurven äquivalent angewendet werden.

Weiterhin ist es möglich, anstelle eines Motors einen anderen Fremdantrieb auf den unteren Abschnitt 18 der Welle einwirken zu lassen, beispielsweise einen Hydraulik- oder Pneumatikzylinder, dessen Kolbenstange über einen Hebel an dem unteren Abschnitt 18 angreift. Weiterhin muß der Fremdantrieb beispielsweise in Form eines Elektromotors nicht unmittelbar an dem unteren Abschnitt 18 angesetzt sein, sondern kann sich entfernt hiervon befinden, wobei dann eine Verbindung zwischen der Abtriebswelle des Motors und dem unteren Abschnitt 18 der Welle 16 über eine flexible Welle oder dergleichen erfolgt. Diese flexible Welle kann bei Bedarf auch über ein Handrad seitens des Fahrers in Drehung versetzt werden, so daß der Tragarm 6 gegenüber dem Halteteil 4 vom Fahrer von Hand, jedoch ohne den Fahrersitz verlassen zu müssen, verstellt oder verschwenkt werden kann.

In jedem Fall ist der an dem unteren Abschnitt 18 angreifende Fremdantrieb so ausgelegt, daß bei einem Auftreffen des am Antragarm 6 befestigten Spiegels auf ein festes Hindernis die gesamte Vorrichtung 2 in sich um das Schwenklager 8 drehen kann, um es dem Spiegel bzw. dem Tragarm 6 zu ermöglichen, eine entsprechende Ausweichbewegung durchzuführen.

## Patentansprüche

1. Vorrichtung zum schwenkbeweglichen Lagern eines Tragarms (6) für einen Außenspiegel eines Kraftfahrzeugs gegenüber einem karosseriefesten Halteteil (4), wobei zwischen dem Halteteil (4) und dem Tragarm (6) ein Schwenklager (8) angeordnet ist, und wobei eine Verschwenkungsbewegung des Tragarms (6) gegenüber dem Halteteils (4) um die Schwenkachse (10) des Schwenklagers (8) durch einen am Schwenklager (8) über einen Getriebemechanismus angreifenden Fremdantrieb bewirkt wird,
***dadurch gekennzeichnet, daß***
der Getriebemechanismus aufweist:
a) eine mit der Schwenkachse (10) des Schwenklagers (8) fluchtende Welle (16), welche zumindest über einen Teilabschnitt ihrer Längserstreckung ein Außengewinde (20) aufweist und an welcher ein Rotationsdrehmoment des Fremdantriebs angreift;
b) ein Mitnehmerteil (46), welches in Gewindeeingriff mit dem Außengewinde (20) der Welle (16) ist und welches gegenüber dem karosseriefesten Halteteil (4) oder gegenüber dem Tragarm (6) gelagert und bei Drehung der Welle (16) entlang der Längsachse der Welle (16) linear beweglich ist;
c) ein drehbeweglich gegenüber dem karosseriefesten Halteteil (4) oder dem Tragarm (6) gelagertes Steuerteil (24), welches wenigstens eine Steuerkurve (54a, 54b) aufweist, welche von dem Mitnehmerteil (46) durchsetzt wird, so daß eine Linearbewegung des Mitnehmerteils (46) entlang der Welle (16) in eine Drehbewegung des Steuerteils (24) umgesetzt wird; und
d) eine Verbindung zwischen dem Steuerteil (24) und dem Tragarm (6) des Spiegels zur Übertragung der Drehbewegung des Steuerteils (24) auf den Tragarm (6) oder eine Verbindung zwischen dem Steuerteil (24) und dem karosseriefesten Halteteil (4), so dass eine Drehbewegung des Steuerteils (24) auf das karosseriefeste Halteteil (4) übertragbar und damit der Tragarm (6) relativ zum karosseriefesten Halteteil (4) verschwenkbar wird.

2. Vorrichtung nach Anspruch 1, **dadurch gekennzeichnet, daß** der Winkelbereich der Verschwenkungsbewegung begrenzt ist.

3. Vorrichtung nach Anspruch 1 oder 2, **dadurch gekennzeichnet, daß** die Verschwenkungsbewegung durch Umkehrung der Drehrichtung des Fremdantriebs reversibel ist.

4. Vorrichtung nach einem der vorhergehenden Ansprüche, **dadurch gekennzeichnet, daß** der Fremdantrieb ein Motor, insbesondere ein Elektromotor ist.

5. Vorrichtung nach Anspruch 1, **dadurch gekennzeichnet, daß** die Verbindung zwischen Steuerteil (24) und Tragarm (6) durch ein mit dem Steuerteil drehfest verbundenes Übertragungsteil (38) erfolgt.

6. Vorrichtung nach einem der vorhergehenden Ansprüche, **dadurch gekennzeichnet, daß** die Welle (16) und das Steuerteil (24) koaxial angeordnet sind und in einer am karosseriefesten Halteteil (4) ausgebildeten Lagerbuchse (12) aufgenommen sind.

7. Vorrichtung nach einem der vorhergehenden Ansprüche, **dadurch gekennzeichnet, daß** das Mitnehmerteil (46) ein mit einer Gewindeöffnung zur Aufnahme des Außengewindes (20) der Welle (16) versehenes Mittelstück (48) und wenigstens einen hiervon vorstehenden Zapfen (50) aufweist, der zur Lagerung des Mitnehmerteils (46) in einem in der Lagerbuchse (12) ausgebildeten Führungsschlitz (52) läuft.

8. Vorrichtung nach Anspruch 7, **dadurch gekennzeichnet, daß** von dem Mittelstück (48) zwei in Umfangsrichtung bevorzugt um 180° beabstandete Zapfen (50a, 50b) vorstehen, welche in zwei entsprechend beabstandeten Führungsschlitzen (52a, 52b) der Lagerbuchse (12) laufen.

9. Vorrichtung nach Anspruch 7 oder 8, **dadurch gekennzeichnet, daß** der Führungsschlitz oder die Führungsschlitze (52a, 52b) parallel zur Schwenkachse (10) verläuft oder verlaufen.

10. Vorrichtung nach einem der einem der vorhergehenden Ansprüche, **dadurch gekennzeichnet, daß** das Steuerteil (24) zwei in Umfangsrichtung bevorzugt um 180° beabstandete Steuerkurven (54a, 54b; 54a', 54b') aufweist, welche von den beiden Zapfen (50a, 50b) des Mitnehmerteils (46) durchsetzt werden.

11. Vorrichtung nach einem der vorhergehenden Ansprüche, **dadurch gekennzeichnet, daß** der Führungsschlitz oder die Führungsschlitze (52a, 52b) in der Lagerbuchse (12) wendelförmig verläuft oder verlaufen und daß die Steuerkurven (54a, 54b) in dem Steuerteil (24) geradlinig und parallel zur Schwenkachse (10) verlaufen.

12. Vorrichtung nach einem der vorhergehenden Ansprüche, **dadurch gekennzeichnet, daß** das Steuerteil (24) die Form einer oben im wesentlichen geschlossenen und unten offenen Hülse hat.

13. Vorrichtung nach einem der vorhergehenden Ansprüche, **dadurch gekennzeichnet, daß** in dem im wesentlichen geschlossene Ende (26) der Hülse ein Drehlager (36), insbesondere ein Kugellager angeordnet ist, welches zwischen einer Stirnfläche der Welle (16) und dem Übertragungsteil (38) wirkt.

14. Vorrichtung nach Anspruch 12 oder 13, **dadurch gekennzeichnet, daß** das offene Ende (28) der Hülse durch eine von der Welle (16) durchtretene Positionierscheibe (30) verschlossen ist, wobei die Hülse auf der Welle (16) zwischen dem Drehlager (36) und der Positionierscheibe (30) verspannt ist.

15. Vorrichtung nach einem der Ansprüche 5 bis 14, **dadurch gekennzeichnet, daß** das Übertragungsteil (38) mit dem Steuerteil (24) und dem Tragarm (6) verschraubt ist.

16. Vorrichtung nach einem der Ansprüche 6 bis 15, **dadurch gekennzeichnet, daß** die Hülse zumindest über einen Teil ihrer Längserstreckung umfangsseitig an der Innenwand der am karosseriefesten Halteteil (4) ausgebildeten Lagerbuchse (12) geführt ist.

17. Vorrichtung nach einem der vorhergehenden Ansprüche, **gekennzeichnet durch** ein am karosseriefesten Halteteil (4) angeordnetes Lager (22) zur Führung eines dem Drehlager (36) gegenüberliegenden Endabschnitts der Welle (16).

## Claims

1. Apparatus for pivotally mounting a carrying arm (6) for an outside mirror of a motor vehicle relative to a retaining member (4) affixed to the body, wherein a pivot bearing (8) is arranged between the retaining member (4) and the carrying arm (6), and wherein a pivoting movement of the carrying arm (6) relative to the retaining member (4) about the pivot axis (10) of the pivot bearing (8) is effected by an auxiliary drive acting on the pivot bearing (8) via a transmission mechanism,
***characterized in that***
the transmission mechanism includes:
a) a shaft (16) aligned with the pivot axis (10) of the pivot bearing (8), which shaft has at least over a partial section of its longitudinal extent an external thread (20), and on which shaft a torque of the auxiliary drive acts;
b) a drive member (46) in threaded engagement with the external thread (20) of the shaft (16), which is mounted relative to the retaining member (4) affixed to the body or relative to the carrying arm (6), and which is linearly movable along the longitudinal axis of the shaft (16) upon a rotation of the shaft (16);
c) a control component (24) which is rotatably movable relative to the retaining member (4) affixed to the body and has at least one control cam (54a, 54b) which is penetrated by the drive member (46), so that a linear movement of the drive member (46) along the shaft (16) is converted into a rotational movement of the control component (24); and
d) a connection between the control component (24) and the carrying arm (6) of the mirror for transmitting the rotational movement of the control component (24) to the carrying arm (6), or a connection between the control component (24) and the retaining member (4) affixed to the body, so as to enable the transmission of a rotational movement of the control component (24) to the retaining member (4) affixed to the body and thus pivoting of the carrying arm (6) relative to the retaining member (4) affixed to the body.

2. The apparatus in accordance with claim 1, **characterized in that** the angular range of the pivoting movement is limited.

3. The apparatus in accordance with claim 1 or 2, **characterized in that** the pivoting movement may be reversed by reversing the direction of rotation of the auxiliary drive.

4. The apparatus in accordance with one of the foregoing claims, **characterized in that** the auxiliary drive is a motor, in particular an electric motor.

5. The apparatus in accordance with claim 1, **characterized in that** the connection between control component (24) and carrying arm (6) is established by a transfer member (38) which rotates as a unit with the control component.

6. The apparatus in accordance with one of the foregoing claims, **characterized in that** the shaft (16) and the control component (24) are arranged coaxially and received in a bearing bush (12) on the retaining member (4) affixed to the body.

7. The apparatus in accordance with one of the foregoing claims, **characterized in that** the drive member (46) has a center piece (48) provided with a threaded opening for receiving the external thread section (20) of the shaft (16), and at least one stud (50) projecting from it which runs in a guide slot (52) formed in the bearing bush (12) for mounting the drive member (46).

8. The apparatus in accordance with claim 7, **characterized in that** two studs (50a, 50b) circumferentially spaced apart by preferably 180 DEG project from the center piece (48) and run in two correspondingly spaced-apart guide slots (52a, 52b) of the bearing bush (12).

9. The apparatus in accordance with claim 7 or 8, **characterized in that** the guide slot(s) (52a, 52b) extend(s) parallel to the pivot axis.

10. The apparatus in accordance with one of the foregoing claims, **characterized in that** the control component (24) includes two control cams (54a, 54b, 54a', 54b') circumferentially spaced apart by preferably 180 DEG, which are penetrated by the two studs (50a, 50b) of the drive member (46).

11. The apparatus in accordance with one of the foregoing claims, **characterized in that** the guide slot(s) (52a, 52b) in the bearing bush (12) have a helical configuration, and that the control cams (54a, 54b) in the control component (24) are rectilinear and parallel to the pivot axis (10).

12. The apparatus in accordance with one of the foregoing claims, **characterized in that** the control component (24) has the shape of a sleeve which is substantially closed at the top and open at the bottom.

13. The apparatus in accordance with one of the foregoing claims, **characterized in that** in the substantially closed end (26) of the sleeve there is arranged a rotational bearing (36), in particular a ball bearing, which acts between one end face of the shaft (16) and the transfer member (38).

14. The apparatus in accordance with claim 12 or 13, **characterized in that** the open end (28) of the sleeve is closed by a positioning disc (30) which is penetrated by the shaft (16), with the sleeve being stressed between the rotational bearing (36) and the positioning disc (30).

15. The apparatus in accordance with one of claims 5 to 14, **characterized in that** the transfer member (38) is connected to the control component (24) and the carrying arm (6) by screw means.

16. The apparatus in accordance with one of claims 6 to 15, **characterized in that** the sleeve (24) is circumferentially guided by at least part of its longitudinal extent on the inner wall of the bearing bush (12) that is formed at the retaining member (4) affixed to the body.

17. The apparatus in accordance with one of the foregoing claims, **characterized by** a bearing (22) positioned at the retaining member (4) affixed to the body, for guiding an end section of the shaft (16) opposite the rotational bearing (36).

## Revendications

1. Un dispositif de montage pivotant d'un bras support (6) pour un rétroviseur extérieur d'un véhicule automobile par rapport à une partie de maintien (4) fixée à la carrosserie, où, entre la partie de maintien (4) et le bras support (6), est disposé un palier de pivotement (8), et où un mouvement de pivotement du bras support (6) par rapport à la partie de maintien (4), autour de l'axe de pivotement (10) du palier de pivotement (8), est provoqué par un entraînement extérieur, agissant sur le palier de pivotement (8) par l'intermédiaire d'un mécanisme de transmission,
**caractérisé en ce que**
le mécanisme de transmission présente :
a) un arbre (16), en alignement avec l'axe de pivotement du palier de pivotement (8) et présentant, au moins sur un tronçon partiel de sa longueur, un filetage extérieur (20) et sur lequel agit un couple de rotation de l'entraînement extérieur;
b) une partie d'entraînement (46), mise en prise par filetage avec le filetage extérieur (20) de l'arbre (16) et qui est montée par rapport à la partie de maintien (4) fixée à la carrosserie ou par rapport au bras support (6) et qui, en cas de rotation de l'arbre (16), est déplaçable de façon linéaire le long de l'axe longitudinal de l'arbre (16);
c) une partie de commande (24) à mobilité en rotation par rapport à la partie de maintien (4) fixée à la carrosserie ou bien au bras support (6), partie de commande présentant au moins une came de commande (54a, 54b) traversée par la partie d'entraînement (46), de manière qu'un déplacement linéaire de la partie d'entraînement (46) le long de l'arbre (16) soit converti en un mouvement rotatif de la partie de commande (24); et
d) une liaison entre la partie de commande (24) et le bras support (6) du rétroviseur, pour la transmission du mouvement rotatif de la partie de commande (24) au bras support (6), ou une liaison entre la partie de commande (24) et la partie de maintien (4) fixée à la carrosserie, de manière qu'un mouvement rotatif de la partie de commande (24) puisse être transmis à la partie de maintien (4) fixée à la carrosserie et qu'ainsi le bras support (6) puisse pivoter par rapport à la partie de maintien (4) fixée à la carrosserie.

2. Dispositif selon la revendication 1, **caractérisé en ce que** la plage angulaire du mouvement de pivotement est limitée.

3. Dispositif selon la revendication 1 ou 2, **caractérisé en ce que** le mouvement de pivotement est réversible, par une inversion du sens de rotation de l'entraînement extérieur.

4. Dispositif selon l'une des revendications précédentes, **caractérisé en ce que** l'entraînement extérieur est un moteur, en particulier un moteur électrique.

5. Dispositif selon la revendication 1, **caractérisé en ce que** la liaison, entre la partie de commande (24) et le bras support (6), s'effectue au moyen d'une partie de transmission (38), reliée de façon assujettie en rotation à la partie de commande.

6. Dispositif selon l'une des revendications précédentes, **caractérisé en ce que** l'arbre (16) et la partie de commande (24) sont disposés de façon coaxiale et sont logés dans un coussinet de palier (12), réalisé sur la partie de maintien (4) fixé à la carrosserie.

7. Dispositif selon l'une des revendications précédentes, **caractérisé en ce que** la partie d'entraînement (46) présente une pièce centrale (48) munie d'une ouverture taraudée, pour recevoir le filetage extérieur (20) de l'arbre (16), et présente au moins un tourillon (50) en saillie de celle-ci, se déplaçant dans une fente de guidage (52) réalisée dans le coussinet de palier (12), afin d'assurer la fonction de montage en palier de la partie d'entraînement (46).

8. Dispositif selon la revendication 7, **caractérisé en ce que** de la partie centrale (48) font saillie deux tourillons (50a, 50b) espacés en direction périphérique, de préférence de 180°, et se déplaçant dans deux fentes de guidage (52a, 52b), espacées de manière correspondante, du coussinet de palier (12).

9. Dispositif selon la revendication 7 ou 8, **caractérisé en ce que** la fente de guidage ou les fentes de guidage (52a, 52b) s'étend ou s'étendent parallèlement à l'axe de pivotement (10).

10. Dispositif selon l'une des revendications précédentes, **caractérisé en ce que** la partie de commande (24) présente deux cames de commande (54a, 54b; 54a', 54b') espacées en direction périphérique, de préférence de 180°, et traversées par les deux tourillons (50a, 50b) de la partie d'entraînement (46).

11. Dispositif selon l'une des revendications précédentes, **caractérisé en ce que** la fente de guidage ou les fentes de guidage (52a, 52b) s'étend ou s'étendent en forme d'hélice dans le coussinet de palier (12), et **en ce que** les cames de commande (54a, 54b) s'étendent de façon rectiligne et parallèle à l'axe de pivotement (10), dans la partie de commande (24) .

12. Dispositif selon l'une des revendications précédentes, **caractérisé en ce que** la partie de commande (24) a la forme d'une douille, pratiquement fermée en partie supérieure et ouverte en partie inférieure.

13. Dispositif selon l'une des revendications précédentes, **caractérisé en ce que** dans l'extrémité (26), pratiquement fermée de la douille, est disposé un palier de rotation (36), en particulier un roulement à billes, agissant entre une face frontale de l'arbre (13) et la partie de transmission (38).

14. Dispositif selon la revendication 12 ou 13, **caractérisé en ce que** l'extrémité ouverte (28) de la douille est fermée par un disque de positionnement (30) traversé par l'arbre (16), la douille étant serrée sur l'arbre (16), entre le palier de rotation (36) et le disque de positionnement (30).

15. Dispositif selon l'une des revendications 5 à 14, **caractérisé en ce que** la partie de transmission (38) est vissée à la partie de commande (24) et au bras support (6).

16. Dispositif selon l'une des revendications 6 à 15, **caractérisé en ce que** la douille est guidée, au moins sur une partie de sa longueur, côté périphérie, sur la paroi intérieure du coussinet de palier (12) réalisé sur la partie de maintien (4) fixée à la carrosserie.

17. Dispositif selon l'une des revendications précédentes, **caractérisé par** un palier (22) disposé sur la partie de maintien (4) fixée à la carrosserie, afin de guider un tronçon d'extrémité, opposé au palier de rotation (36), de l'arbre (16).
